# EUROPEAN PATENT SPECIFICATION

(11) **EP 2 949 558 B1**
(45) Date of publication and mention of the grant of the patent: **15.06.2016**
(21) Application number: 15152771.0
(22) Date of filing: 28.01.2015
(51) Int. Cl.: B62J 6/18, B62J 15/00, B62J 15/02

(54) **Straddle-type vehicle**
Grätschsitz-Fahrzeug
Véhicule du type monté à califourchon

(30) Priority: 27.05.2014 JP 2014108811
(43) Date of publication of application: 02.12.2015
(73) Proprietor: Yamaha Hatsudoki Kabushiki Kaisha, Iwata-shi, Shizuoka 438-8501 (JP)
(72) Inventor: Yagi, Kyohei, Iwata-shi, Shizuoka 438-8501 (JP)
(74) Representative: Grünecker Patent- und Rechtsanwälte PartG mbB

(56) References cited:
- EP-A1- 2 287 066
- EP-A1- 2 669 165
- EP-A2- 2 213 559

## Description

The present invention relates to a straddle-type vehicle according to the preamble of independent claim 1. Such a straddle-type vehicle can be taken from the prior art document EP 2 213 559 A2. Said document discloses a rear fender structure for motorcycle and a motorcycle. A rear rear-fender bracket integrally coupled to an upper portion and a lower portion of a rear rear-fender that is mounted to a rear portion of a vehicle body of a motorcycle, extending rearward and downward, and covering a rear wheel from upward and rearward, is provided to the rear rear-fender, and forms, with an internal surface of the rear rear-fender, a closed space having an inverted triangular shape when viewed from a vehicle side in which a space is gradually narrowed from an upper portion to a lower portion. Further, at the time of mounting, the rear rear-fender and the rear rear-fender bracket are coupled by being screwed together by rear winkers on sides of the vehicle (long holes). Further, a lower portion of the rear rear-fender and a lower portion of the rear rear-fender bracket are coupled by being screwed together by a license plate mounting bracket.

The prior art document EP 2 669 165 A1 discloses a saddle-ride type vehicle which can secure strength for supporting a rear fender, a license light, and the like and improve exterior at the same time and which can be customized easily as well. Therefore, a rear fender includes a front-side rear fender forming a front part and a rear-side rear fender attached to a rear portion of the front-side rear fender. The rear-side rear fender includes an outer fender designed to be visually recognized as exterior when viewed from the rear of the vehicle, an inner fender provided inside the outer fender, and a metal rear stay provided between the outer fender and the inner fender. The rear stay is detachably attached to a vehicle body frame.

The prior art document EP 2 287 066 A1 discloses side trunk mounting structure for a two-wheeled motor vehicle which enhances the external appearance of a two-wheeled motor vehicle. Mounting holes for mounting the side trunk are formed in a rear fender. The side trunk mounting holes are located below a rider's seat.

A straddle-type vehicle conventionally includes a rear fender and a mudguard. The rear render and the mudguard are provided above a rear wheel. The rear fender and the mudguard are disposed to cover the rear wheel so as to provide protection against water and/or mud splashed from the rear wheel during traveling of the straddle-type vehicle.

JP 2008-162511 A discloses a straddle-type vehicle including a rear fender and a mudguard which are molded in one piece. With a view to reducing the straddle-type vehicle in weight, the rear fender and the mudguard are made of a resin material.

In the straddle-type vehicle disclosed in JP 2008-162511 A, a flasher light is disposed in its rear portion. Therefore, the mudguard has to be connected to the rear fender at a position forward relative to the flasher light. Depending on an attachment position of the flasher light, a length of the mudguard in a front-rear direction of the vehicle must be increased. Since the mudguard is made of a resin material, rigidity of the mudguard might unfavorably be insufficient when the length of the mudguard in the front-rear direction of the vehicle is increased.

It is conceivable that a mudguard and a rear fender may be molded separately and a metal connection member having high rigidity may be disposed between the rear fender and the mudguard in order to ensure rigidity of the mudguard. In such a case, the connection member is made of a material that is more rigid but heavier than a resin material, and therefore; the connection member to be used is preferably small in size for a reduction in weight of a straddle-type vehicle. The connection member is preferably U-shaped in cross section in terms of ensuring rigidity of the connection member. However, when the connection member is small in size and U-shaped in cross section, the connection member unfortunately cannot provide effective protection against water and/or mud splashed from a rear wheel, thus throwing up the water and/or mud from a peripheral region of the connection member.

It is the object of the present invention to provide a straddle-type vehicle that provides sufficient protection against mud and ensures rigidity of a mudguard.

According to the present invention said object is solved by a straddle-type vehicle having the features of independent claim 1. Preferred embodiments are laid down in the dependent claims.

A straddle-type vehicle according to a preferred embodiment includes: a main frame; a left seat frame extending rearward from the main frame; a right seat frame extending rearward from the main frame, the right seat frame being disposed rightward of the left seat frame; a tail light disposed rearward relative to the right and left seat frames; a left rear flasher disposed forward relative to the tail light; a right rear flasher disposed forward relative to the tail light; a rear wheel disposed below the right and left seat frames; a rear fender disposed under the right and left seat frames and over a portion of the rear wheel; a metal connection member disposed under the tail light and connected to the right and left seat frames at positions forward relative to the right and left rear flashers, the connection member extending rearward from the right and left seat frames; and a mudguard connected to the connection member and extending obliquely downward and rearward from the connection member, the mudguard including a rear end disposed rearward relative to the rear wheel. The connection member includes: a first upper wall overlapping with the rear wheel in a plan view of the vehicle; a first left side wall extending obliquely downward and leftward from a left end of the first upper wall and provided with a first opening; and a first right side wall extending obliquely downward and rightward from a right end of the first upper wall and provided with a second opening. The first and second openings are covered with a plate member molded of a resin material that is lighter in weight than the connection member.

In the straddle-type vehicle according to the preferred embodiment, the connection member is connected to the right and left seat frames at the positions forward relative to the right and left rear flashers. Therefore, a length measured from the connection positions between the connection member and the right and left seat frames to the rear end of the mudguard is relatively long. However, the connection member having high rigidity connects the mudguard and the right and left seat frames to each other, and therefore, a length of the mudguard in a front-rear direction of the vehicle is shorter and rigidity of the mudguard is higher than when the rear fender and the mudguard are molded in one piece. The first left side wall and the first right side wall of the connection member each extend obliquely downward. Hence, although the connection member does not change in weight, a length of the connection member in a width direction of the vehicle is longer than when the first left side wall and the first right side wall simply extend downward, i.e., than when the connection member is U-shaped in cross section. As a result, the connection member provides improved protection against mud. The connection member is provided with the first and second openings for a reduction in weight of the straddle-type vehicle, but the first and second openings are covered with the plate member made of a lightweight resin material. Therefore, even when the first right side wall and the first left side wall of the connection member extend obliquely downward, mud or the like thrown up from the rear wheel is prevented from splashing on the tail light and/or rider through the first and second openings.

According to another preferred embodiment, the plate member and the mudguard are preferably molded in one piece.

According to the above-described preferred embodiment, a component that connects the plate member and the mudguard to each other does not have to be provided, and therefore, the number of components is reduced, resulting in a reduction in weight.

According to still another preferred embodiment, the connection member preferably includes: a first left wall including a first left engagement portion and extending leftward from the first left side wall; and a first right wall including a first right engagement portion and extending rightward from the first right side wall. The mudguard preferably includes: a second left wall including a second left engagement portion that engages with the first left engagement portion; and a second right wall including a second right engagement portion that engages with the first right engagement portion. The plate member preferably includes: a second upper wall disposed to face the first upper wall; a second left side wall extending obliquely downward and leftward from a left end of the second upper wall, and covering the first opening; and a second right side wall extending obliquely downward and rightward from a right end of the second upper wall, and covering the second opening. The first upper wall of the connection member and the second upper wall of the plate member are preferably disposed between the second left wall and the second right wall. A lower surface of the first upper wall of the connection member preferably faces an upper surface of the second upper wall of the plate member. An upper surface of the first left wall and an upper surface of the first right wall preferably face a lower surface of the second left wall and a lower surface of the second right wall, respectively.

According to the above-described preferred embodiment, the connection member and the mudguard are connected to each other with more reliability.

According to yet another preferred embodiment, the first left side wall preferably includes: a first left portion provided with the first opening; and a second left portion located rearward relative to the first left portion. A dimension of the second left portion in a width direction of the vehicle is preferably smaller than a dimension of the first left portion in the width direction of the vehicle. The second left wall is preferably disposed leftward of the second left portion of the first left side wall. The first right side wall preferably includes: a first right portion provided with the second opening; and a second right portion located rearward relative to the first right portion. A dimension of the second right portion in the width direction of the vehicle is preferably smaller than a dimension of the first right portion in the width direction of the vehicle. The second right wall is preferably disposed rightward of the second right portion of the first right side wall.

According to the above-described preferred embodiment, the second left wall is disposed leftward of the second left portion of the first left side wall. Thus, even when the dimension of the second left portion in the width direction of the vehicle is made smaller than the dimension of the first left portion in the width direction of the vehicle, the second left wall provides protection against, for example, mud thrown up from the rear wheel. The second right wall is disposed rightward of the second right portion of the first right side wall. Thus, even when the dimension of the second right portion in the width direction of the vehicle is made smaller than the dimension of the first right portion in the width direction of the vehicle, the second right wall provides protection against, for example, mud thrown up from the rear wheel. Consequently, the connection member is reduced in size, resulting in a reduction in weight.

According to still yet another preferred embodiment, a dimension of the first left portion in an up-down direction of the vehicle is preferably larger than a dimension of the second left portion in the up-down direction of the vehicle. A dimension of the first right portion in the up-down direction of the vehicle is preferably larger than a dimension of the second right portion in the up-down direction of the vehicle.

According to the above-described preferred embodiment, the connection member itself is reduced in weight while rigidity of the connection member is ensured.

According to another preferred embodiment, the straddle-type vehicle preferably further includes: a battery disposed in front of the tail light; an attachment portion to which a license plate is attachable, the attachment portion being disposed on the mudguard; a license plate light disposed above the attachment portion, the license plate light being arranged to apply light to the license plate when the license plate is attached to the attachment portion; and a cable connected to the battery and the license plate light. The plate member preferably includes a lower wall disposed below the second upper wall and extending in a front-rear direction of the vehicle. The cable is preferably disposed on the lower wall.

According to the above-described preferred embodiment, the lower wall is disposed under the cable, thus preventing, for example, mud or a stone thrown up from the rear wheel from splashing or hitting on the cable.

According to still another preferred embodiment, a left end of the first left side wall is preferably located leftward relative to a left end of the rear wheel in a rear view of the vehicle, and a right end of the first right side wall is preferably located rightward relative to a right end of the rear wheel in the rear view of the vehicle.

According to the above-described preferred embodiment, the connection member extends largely in the width direction of the vehicle, and therefore, the connection member provides improved protection against mud.

According to yet another preferred embodiment, the straddle-type vehicle preferably further includes a seat disposed above the right and left seat frames. The first and second openings preferably extend in a front-rear direction of the vehicle. A front edge of the first opening and a front edge of the second opening are preferably located forward relative to a rear end of the seat. A rear edge of the first opening and a rear edge of the second opening are preferably located rearward relative to a front-rear intermediate point of the tail light.

According to the above-described preferred embodiment, the first and second openings are large in size, and therefore, the connection member is reduced in weight.

### ADVANTAGEOUS EFFECTS OF INVENTION

Various preferred embodiments provide a straddle-type vehicle that provides sufficient protection against mud and ensures rigidity of a mudguard.

### BRIEF DESCRIPTION OF DRAWINGS

FIG. 1 is a left side view of a straddle-type vehicle according to a preferred embodiment.
FIG. 2 is a left side view illustrating components of the straddle-type vehicle according to the preferred embodiment which are located in a rear portion of the vehicle.
FIG. 3 is a left side view illustrating components of the straddle-type vehicle according to the preferred embodiment which are located in the rear portion of the vehicle.
FIG. 4 is a plan view illustrating components of the straddle-type vehicle according to the preferred embodiment which are located in the rear portion of the vehicle.
FIG. 5 is a plan view illustrating components of the straddle-type vehicle according to the preferred embodiment which are located in the rear portion of the vehicle.
FIG. 6 is a plan view illustrating components of the straddle-type vehicle according to the preferred embodiment which are located in the rear portion of the vehicle.
FIG. 7 is a cross-sectional view taken along the line VII-VII in FIG. 2.
FIG. 8 is a perspective view of a connection member according to the preferred embodiment.
FIG. 9 is a cross-sectional view taken along the line IX-IX in FIG. 3.
FIG. 10 is a rear view of the straddle-type vehicle according to the preferred embodiment.
FIG. 11 is a perspective view of a mudguard according to the preferred embodiment.

### DESCRIPTION OF EMBODIMENTS

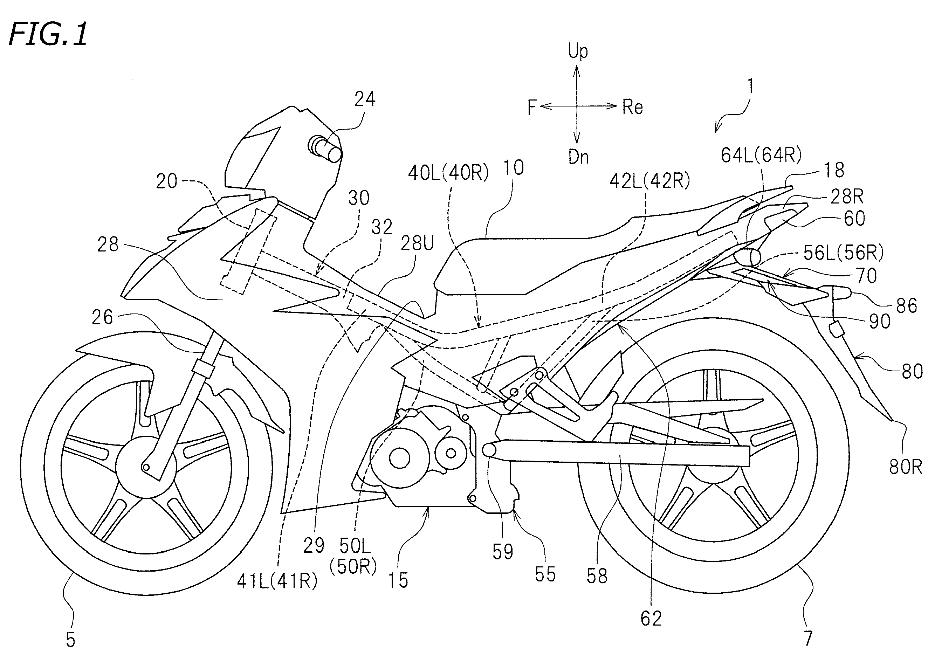

Hereinafter, preferred embodiments will be described. As illustrated in FIG. 1, a motorcycle (straddle-type vehicle) according to the present preferred embodiment is an "underbone type" motorcycle 1. Note that the motorcycle according to the present teaching is not limited to an underbone type motorcycle 1. The motorcycle according to the present teaching may be any other type of motorcycle such as a "moped-type", "street", "off-road" or "scooter-type" motorcycle, for example.

In the following description, unless otherwise noted, the terms "front", "rear", "right", "left", "up" and "down" refer to front, rear, right, left, up and down with respect to a rider sitting on a seat 10 of the motorcycle 1, respectively. The terms "up" and "down" refer to a vertically upward direction and a vertically downward direction when the motorcycle 1 is brought to a stop on a horizontal plane, respectively. Reference signs "F", "Re", "R", "L", "Up" and "Dn" in the drawings represent front, rear, right, left, up and down, respectively.

As illustrated in FIG. 1, the motorcycle 1 preferably includes: a head pipe 20; a body frame 30 connected to the head pipe 20; the seat 10 on which a rider sits; and an engine 15 that is an internal combustion engine. The head pipe 20 supports a steering shaft (not illustrated). An upper portion of the steering shaft is provided with a handlebar 24. A lower portion of the steering shaft is provided with a front fork 26. A front wheel 5 is rotatably supported by a lower end portion of the front fork 26.

As illustrated in FIG. 1, the body frame 30 preferably includes a main frame 32, a left seat frame 40L, a right seat frame 40R, a left down frame 50L, a right down frame 50R, a left backstay 56L, and a right backstay 56R.

As illustrated in FIG. 1, the motorcycle 1 preferably further includes a body cover 28. The body cover 28 is preferably disposed at least laterally of the right and left seat frames 40R and 40L. In the present preferred embodiment, the body cover 28 is disposed laterally of the head pipe 20. The body cover 28 is disposed laterally of the main frame 32. The body cover 28 is disposed laterally of the right and left seat frames 40R and 40L. The body cover 28 preferably includes an upper surface portion 28U located behind the head pipe 20 and in front of the seat 10. The upper surface portion 28U extends obliquely downward and rearward to a position lower than the seat 10. The body cover 28 preferably further includes a recessed portion 29 recessed downward in a side view of the vehicle. The recessed portion 29 is provided behind the head pipe 20. The recessed portion 29 is provided in front of the seat 10. The recessed portion 29 is provided lower than the seat 10. The recessed portion 29 is provided above the engine 15. The body cover 28 includes the recessed portion 29, thus providing a space between the head pipe 20 and the seat 10.

As illustrated in FIG. 1, the engine 15 is disposed below the main frame 32. The engine 15 is supported by the main frame 32. The engine 15 is supported by an engine bracket 55 provided on the right and left down frames 50R and 50L.

As illustrated in FIG. 1, the main frame 32 is connected to the head pipe 20. The main frame 32 extends obliquely downward and rearward from the head pipe 20.

As illustrated in FIG. 1, the left seat frame 40L is connected to the main frame 32. The left seat frame 40L extends rearward from the main frame 32. The left seat frame 40L preferably includes a first left portion 41 L and a second left portion 42L. The first and second left portions 41 L and 42L are integral with each other. The first left portion 41 L extends obliquely downward and rearward from the main frame 32. The second left portion 42L extends obliquely upward and rearward from the first left portion 41 L.

As illustrated in FIG. 1, the right seat frame 40R is connected to the main frame 32. The right seat frame 40R extends rearward from the main frame 32. The right seat frame 40R is disposed rightward of the left seat frame 40L. The right seat frame 40R preferably includes a first right portion 41 R and a second right portion 42R. The first and second right portions 41R and 42R are integral with each other. The first right portion 41 R extends obliquely downward and rearward from the main frame 32. The second right portion 42R extends obliquely upward and rearward from the first right portion 41 R.

As illustrated in FIG. 1, the left down frame 50L extends obliquely downward and rearward from the left seat frame 40L. The left down frame 50L is connected to the first left portion 41 L of the left seat frame 40L. The left down frame 50L extends obliquely downward and rearward from the first left portion 41 L of the left seat frame 40L.

As illustrated in FIG. 1, the right down frame 50R extends obliquely downward and rearward from the right seat frame 40R. The right down frame 50R is located rightward of the left down frame 50L. The right down frame 50R is connected to the first right portion 41 R of the right seat frame 40R. The right down frame 50R extends obliquely downward and rearward from the first right portion 41 R of the right seat frame 40R.

As illustrated in FIG. 1, the motorcycle 1 preferably includes a rear arm 58 connected to the engine bracket 55. The engine bracket 55 and the rear arm 58 are connected to each other via a pivot shaft 59. The rear arm 58 is connected to the engine bracket 55 so as to be swingable. Alternatively, the rear arm 58 may be connected to the body frame 30 or the engine 15 so as to be swingable.

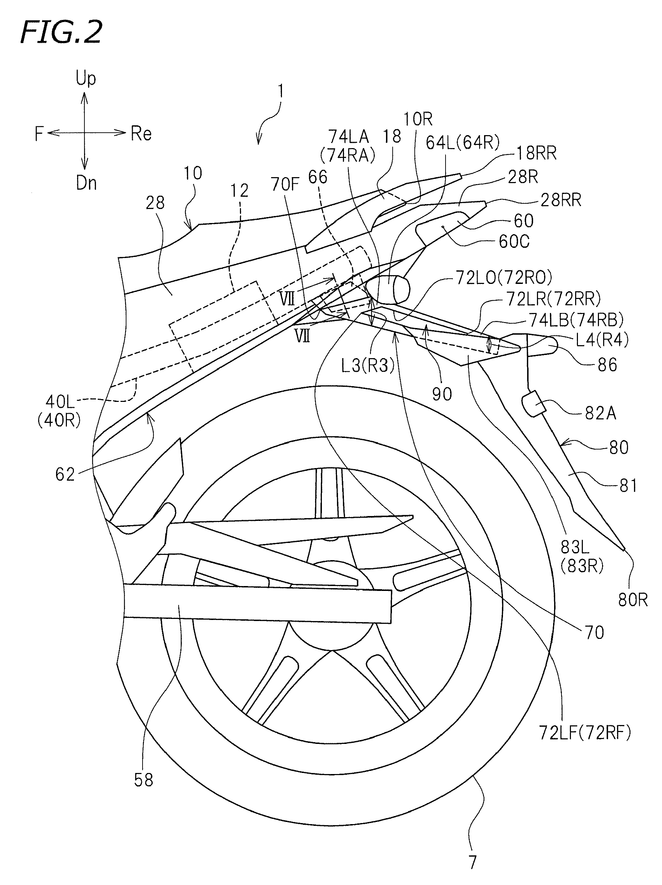

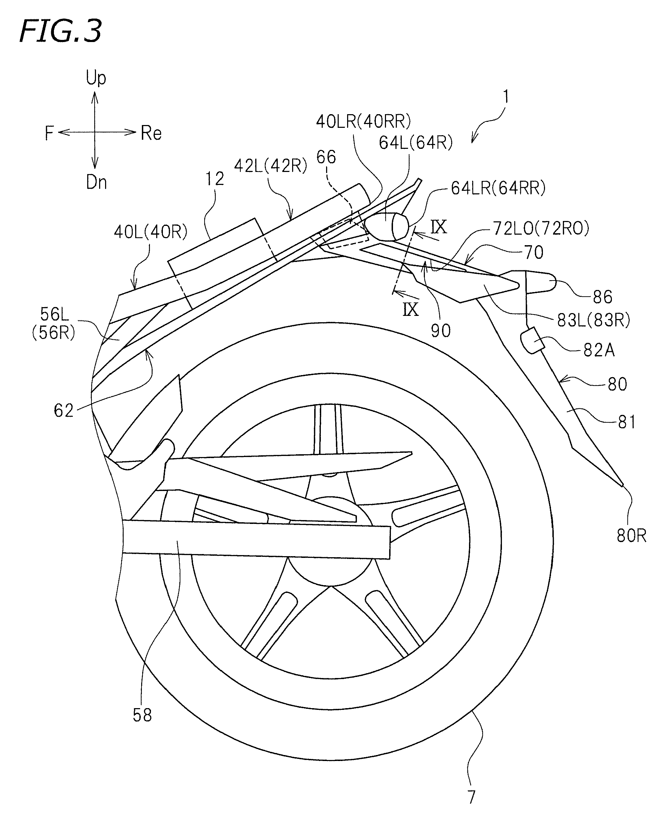

As illustrated in FIG. 2, the motorcycle 1 preferably includes a rear wheel 7. The rear wheel 7 is rotatably supported by a rear end portion of the rear arm 58. As illustrated in FIG. 3, the rear wheel 7 is disposed below the right and left seat frames 40R and 40L. Note that for the sake of convenience of description, the body cover 28 and the seat 10 are not illustrated in FIG. 3.

As illustrated in FIG. 1, the seat 10 is disposed above the right and left seat frames 40R and 40L. The seat 10 is supported by the right and left seat frames 40R and 40L.

As illustrated in FIG. 2, the body cover 28 is provided with a grab bar 18. A rear end 18RR of the grab bar 18 is located rearward relative to the seat 10. The rear end 18RR of the grab bar 18 is located forward relative to a rear end 28RR of the body cover 28.

As illustrated in FIG. 2, the motorcycle 1 preferably includes a battery 12. The battery 12 is disposed under the seat 10. The battery 12 is disposed on or above a rear fender 62 (which will be described below).

As illustrated in FIG. 1, the motorcycle 1 preferably includes the rear fender 62. As illustrated in FIG. 3, the rear fender 62 is disposed under the right and left seat frames 40R and 40L. More specifically, the rear fender 62 is disposed under the second left portion 42L of the left seat frame 40L and the second right portion 42R of the right seat frame 40R. A portion of the rear fender 62 is disposed under the right and left backstays 56R and 56L. The rear fender 62 is disposed over a portion of the rear wheel 7.

As illustrated in FIG. 2, the motorcycle 1 preferably includes a tail light 60. The tail light 60 is provided in a rear portion 28R of the body cover 28. The tail light 60 is disposed rearward relative to the battery 12. The tail light 60 is disposed rearward relative to the right and left seat frames 40R and 40L. A front-rear intermediate point 60C of the tail light 60 is located rearward relative to a rear end 10R of the seat 10.

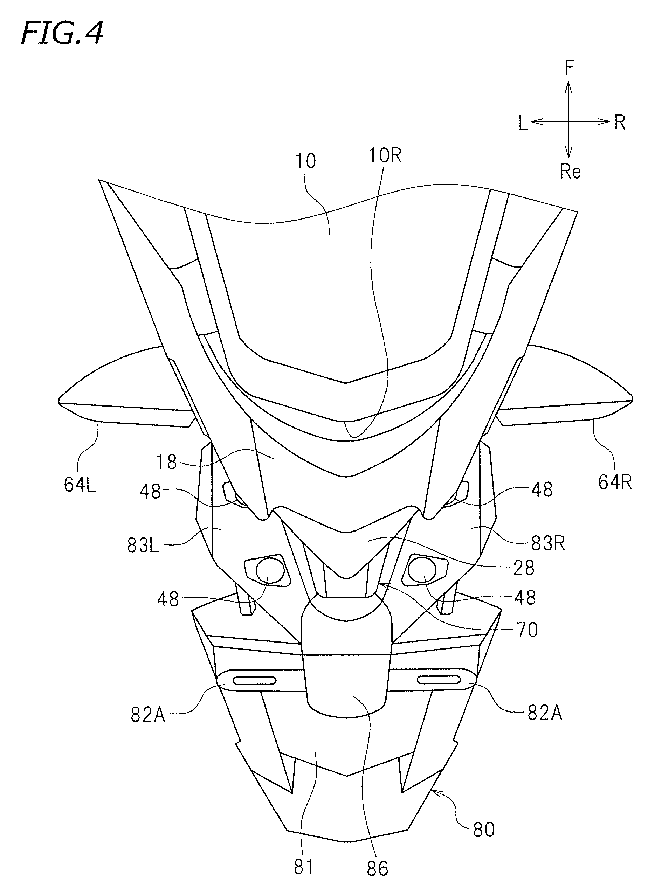

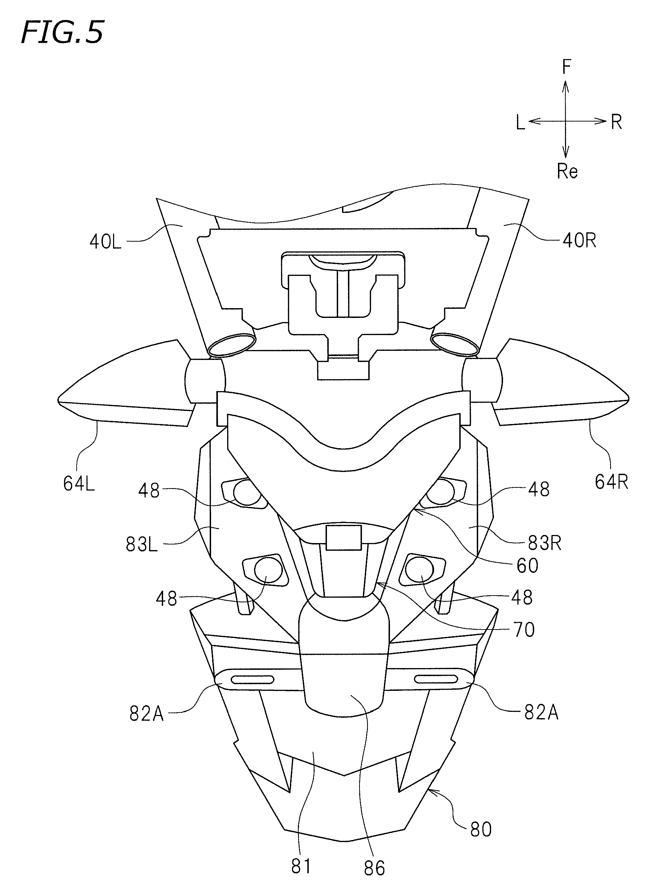

As illustrated in FIG. 4, the motorcycle 1 preferably includes a right rear flasher 64R and a left rear flasher 64L. As illustrated in FIG. 3, the right and left rear flashers 64R and 64L are provided on the rear fender 62. As illustrated in FIG. 2, the right and left rear flashers 64R and 64L are disposed forward relative to the tail light 60. The right and left rear flashers 64R and 64L are disposed forward relative to the front-rear intermediate point 60C of the tail light 60. The right and left rear flashers 64R and 64L are disposed lower than the tail light 60. As illustrated in FIG. 5, the left rear flasher 64L is disposed leftward relative to the tail light 60, and the right rear flasher 64R is disposed rightward relative to the tail light 60. Note that for the sake of convenience of description, the seat 10 and the grab bar 18 are not illustrated in FIG. 5. As illustrated in FIG. 3, a rear end 64LR of the left rear flasher 64L and a rear end 64RR of the right rear flasher 64R are located rearward relative to a rear end 40LR of the left seat frame 40L and a rear end 40RR of the right seat frame 40R.

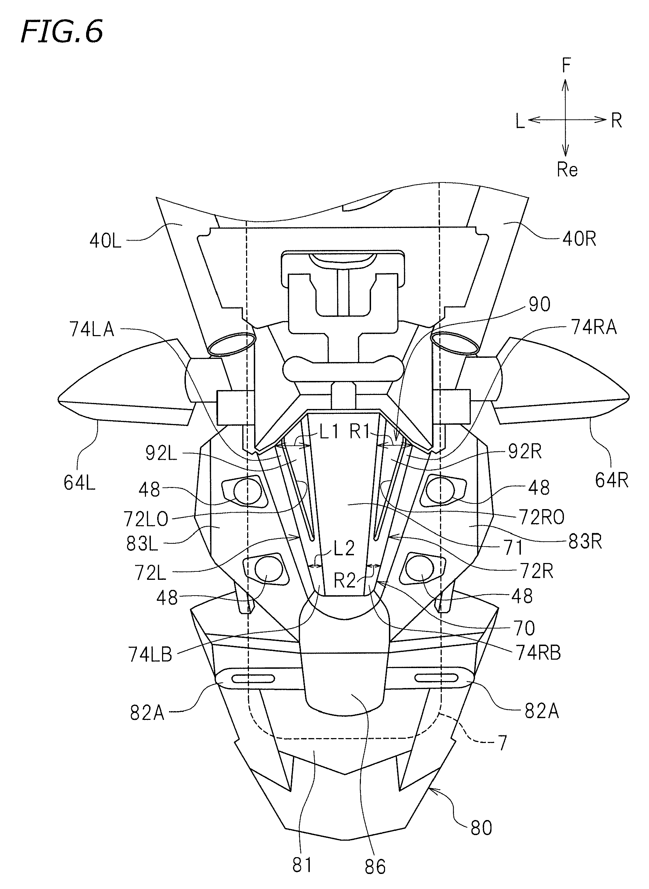

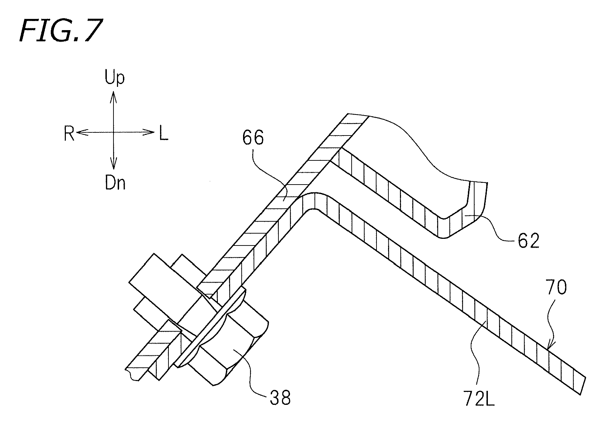

As illustrated in FIG. 1, the motorcycle 1 preferably includes a connection member 70, a mudguard 80, and a plate member 90. The connection member 70 is made of a metal material that is more rigid than a resin material. The connection member 70 is disposed below the tail light 60. As illustrated in FIG. 6, the connection member 70 is disposed rightward relative to the left rear flasher 64L, and leftward relative to the right rear flasher 64R. Note that for the sake of convenience of description, the seat 10, the grab bar 18 and the tail light 60 are not illustrated in FIG. 6. As illustrated in FIG. 2, the connection member 70 is connected to the right and left seat frames 40R and 40L at positions forward relative to the right and left rear flashers 64R and 64L. A front end 70F of the connection member 70 is located forward relative to the right and left rear flashers 64R and 64L. In the present preferred embodiment, as illustrated in FIG. 7, the connection member 70 is connected to a bracket 66 provided on the right and left seat frames 40R and 40L. The connection member 70 and the bracket 66 are fixed to each other with a bolt 38. Alternatively, the connection member 70 may be directly connected to the right and left seat frames 40R and 40L. The connection member 70 extends rearward from the right and left seat frames 40R and 40L. More specifically, the connection member 70 extends obliquely downward and rearward from the right and left seat frames 40R and 40L.

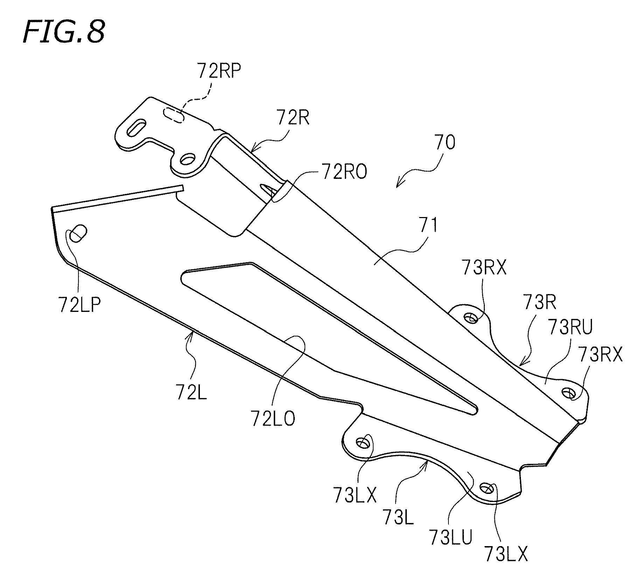

As illustrated in FIG. 8, the connection member 70 preferably includes a first upper wall 71, a first left side wall 72L, a first right side wall 72R, a first left wall 73L, and a first right wall 73R.

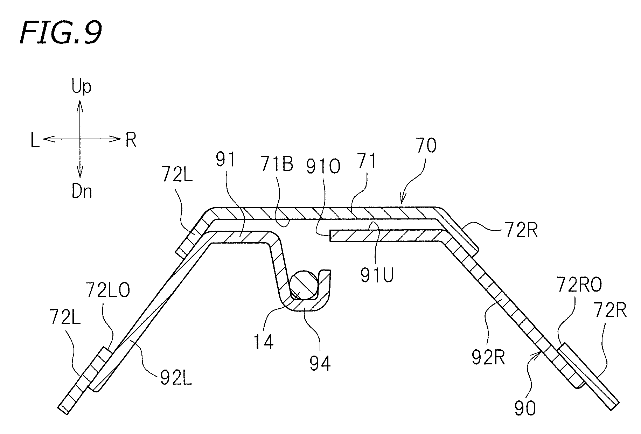

As illustrated in FIG. 6, the first upper wall 71 extends in a front-rear direction of the vehicle. The first upper wall 71 overlaps with the rear wheel 7 in a plan view of the vehicle. The first upper wall 71 is disposed between a second right wall 83R and a second left wall 83L of the mudguard 80 (which will be described below). As illustrated in FIG. 9, a lower surface 71 B of the first upper wall 71 is disposed so as to face an upper surface 91 U of a second upper wall 91 of the plate member 90 (which will be described below).

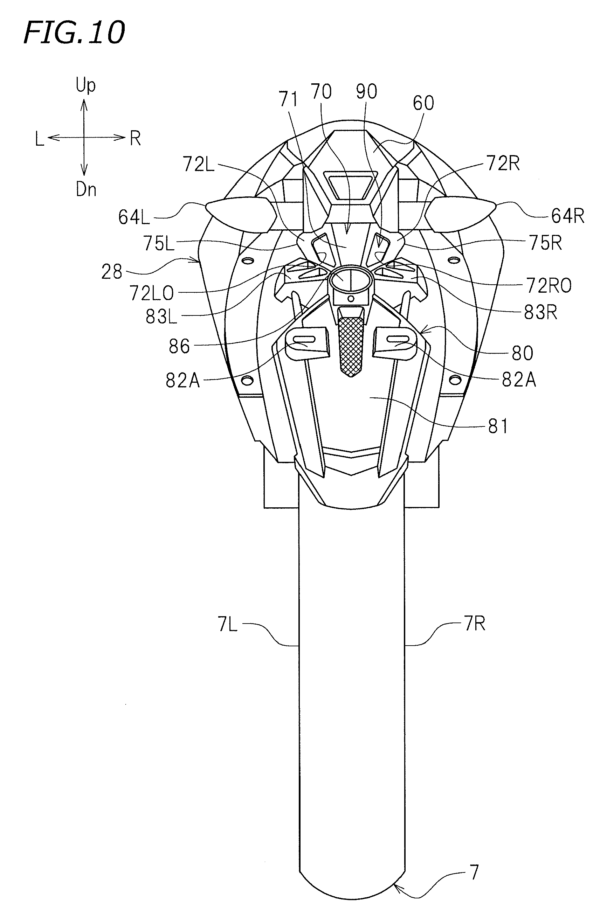

As illustrated in FIG. 9, the first left side wall 72L extends obliquely downward and leftward from a left end of the first upper wall 71. As illustrated in FIG. 10, a left end 75L of the first left side wall 72L is located leftward relative to a left end 7L of the rear wheel 7 in a rear view of the vehicle. As illustrated in FIG. 8, the first left side wall 72L is provided with a first opening 72LO. The first opening 72LO extends in the front-rear direction of the vehicle. A front end portion of the first left side wall 72L is provided with a through hole 72LP. As illustrated in FIG. 6, the first left side wall 72L preferably includes a first left portion 74LA and a second left portion 74LB. The first left portion 74LA is provided with the first opening 72LO. The second left portion 74LB is located rearward relative to the first left portion 74LA. The second left portion 74LB is provided with no first opening 72LO. A dimension L2 of the second left portion 74LB in a width direction of the vehicle is smaller than a dimension L1 of the first left portion 74LA in the width direction of the vehicle. As illustrated in FIG. 2, a dimension L3 of the first left portion 74LA in an up-down direction of the vehicle is larger than a dimension L4 of the second left portion 74LB in the up-down direction of the vehicle. A front edge 72LF of the first opening 72LO is located forward relative to the rear end 10R of the seat 10. A rear edge 72LR of the first opening 72LO is located rearward relative to the front-rear intermediate point 60C of the tail light 60. The rear edge 72LR of the first opening 72LO is located forward relative to the rear end 28RR of the body cover 28.

As illustrated in FIG. 9, the first right side wall 72R extends obliquely downward and rightward from a right end of the first upper wall 71. As illustrated in FIG. 10, a right end 75R of the first right side wall 72R is located rightward relative to a right end 7R of the rear wheel 7 in the rear view of the vehicle. As illustrated in FIG. 8, the first right side wall 72R is provided with a second opening 72RO (see also FIG. 6). The second opening 72RO extends in the front-rear direction of the vehicle. A front end portion of the first right side wall 72R is provided with a through hole 72RP. As illustrated in FIG. 6, the first right side wall 72R preferably includes a first right portion 74RA and a second right portion 74RB. The first right portion 74RA is provided with the second opening 72RO. The second right portion 74RB is located rearward relative to the first right portion 74RA. The second right portion 74RB is provided with no second opening 72RO. A dimension R2 of the second right portion 74RB in the width direction of the vehicle is smaller than a dimension R1 of the first right portion 74RA in the width direction of the vehicle. As illustrated in FIG. 2, a dimension R3 of the first right portion 74RA in the up-down direction of the vehicle is larger than a dimension R4 of the second right portion 74RB in the up-down direction of the vehicle. A front edge 72RF of the second opening 72RO is located forward relative to the rear end 10R of the seat 10. A rear edge 72RR of the second opening 72RO is located rearward relative to the front-rear intermediate point 60C of the tail light 60. The rear edge 72RR of the second opening 72RO is located forward relative to the rear end 28RR of the body cover 28.

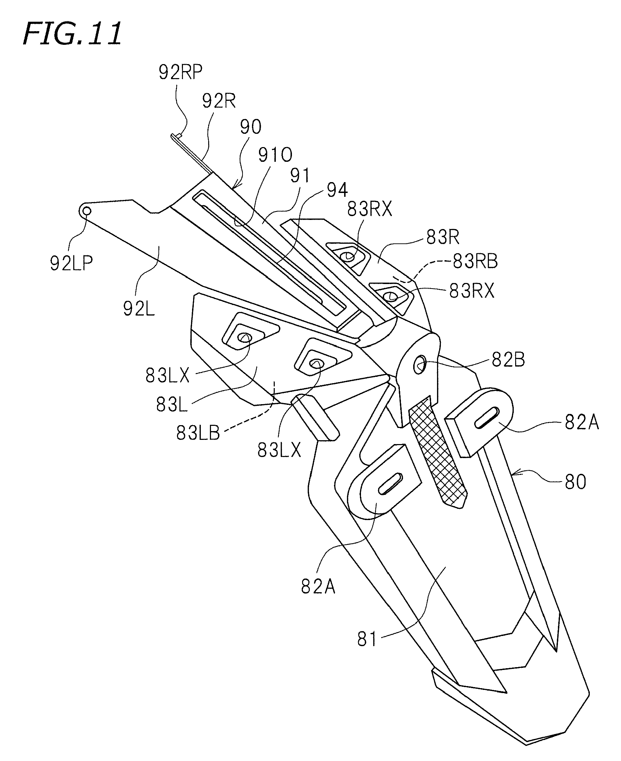

As illustrated in FIG. 8, the first left wall 73L extends leftward from the first left side wall 72L. The first left wall 73L preferably includes first left engagement portions 73LX. The first left engagement portions 73LX are through holes. An upper surface 73LU of the first left wall 73L is disposed so as to face a lower surface 83LB (see FIG. 11) of the second left wall 83L of the mudguard 80 (which will be described below). The first right wall 73R extends rightward from the first right side wall 72R. The first right wall 73R preferably includes first right engagement portions 73RX. The first right engagement portions 73RX are through holes. An upper surface 73RU of the first right wall 73R is disposed so as to face a lower surface 83RB (see FIG. 11) of the second right wall 83R of the mudguard 80 (which will be described below).

As illustrated in FIG. 11, the plate member 90 and the mudguard 80 are molded in one piece. Alternatively, the plate member 90 and the mudguard 80 may be separate components which are molded separately. The plate member 90 is molded of a resin material that is lighter in weight than the metal material used for the connection member 70. As illustrated in FIG. 2, the plate member 90 is disposed under the connection member 70. The plate member 90 covers the first and second openings 72LO and 72RO of the connection member 70. More specifically, the plate member 90 covers the first and second openings 72LO and 72RO from underneath. Alternatively, the plate member 90 may be disposed above the connection member 70. In that case, the plate member 90 covers the first and second openings 72LO and 72RO from above.

As illustrated in FIG. 11, the plate member 90 preferably includes the second upper wall 91, a second left side wall 92L, a second right side wall 92R (see also FIG. 6), and a lower wall 94.

The second upper wall 91 extends in the front-rear direction of the vehicle. The second upper wall 91 is disposed so as to face the first upper wall 71 (see FIG. 8) of the connection member 70. The second upper wall 91 is disposed under the first upper wall 71. The second upper wall 91 is disposed between the second right wall 83R and the second left wall 83L of the mudguard 80 (which will be described below). The second upper wall 91 preferably includes an opening 91O.

As illustrated in FIG. 9, the second left side wall 92L extends obliquely downward and leftward from a left end of the second upper wall 91. As illustrated in FIG. 6, the second left side wall 92L is disposed so as to face the first left side wall 72L. The second left side wall 92L is disposed under the first left side wall 72L. The second left side wall 92L overlaps with the first opening 72LO of the first left side wall 72L in the plan view of the vehicle. The second left side wall 92L covers the first opening 72LO. As illustrated in FIG. 11, a front end portion of the second left side wall 92L is provided with a protrusion 92LP that engages with the through hole 72LP (see FIG. 8) provided in the first left side wall 72L. As illustrated in FIG. 9, the second right side wall 92R extends obliquely downward and rightward from a right end of the second upper wall 91. As illustrated in FIG. 6, the second right side wall 92R is disposed so as to face the first right side wall 72R. The second right side wall 92R is disposed under the first right side wall 72R. The second right side wall 92R overlaps with the second opening 72RO of the first right side wall 72R in the plan view of the vehicle. The second right side wall 92R covers the second opening 72RO. As illustrated in FIG. 11, a front end portion of the second right side wall 92R is provided with a protrusion 92RP that engages with the through hole 72RP (see FIG. 8) provided in the first right side wall 72R. Although the second left side wall 92L and the second right side wall 92R are molded in one piece and thus provided as a single component in the present preferred embodiment, the second left side wall 92L and the second right side wall 92R may be separate components which are molded separately. Also in that case, the second left side wall 92L covers the first opening 72LO, and the second right side wall 92R covers the second opening 72RO.

As illustrated in FIG. 9, the lower wall 94 is disposed below the second upper wall 91. The lower wall 94 extends in the front-rear direction of the vehicle.

As illustrated in FIG. 1, the mudguard 80 is connected to the connection member 70. The mudguard 80 extends obliquely downward and rearward from the connection member 70. A rear end 80R of the mudguard 80 is disposed rearward relative to the rear wheel 7.

As illustrated in FIG. 11, the mudguard 80 preferably includes a main body 81, the second left wall 83L, and the second right wall 83R. The main body 81, the second left wall 83L and the second right wall 83R are molded in one piece. The second left wall 83L extends in the front-rear direction of the vehicle. The second left wall 83L is located leftward relative to the second upper wall 91 of the plate member 90. As illustrated in FIG. 4, the second left wall 83L overlaps with the grab bar 18 in the plan view of the vehicle. As illustrated in FIG. 6, the second left wall 83L is disposed leftward of the second left portion 74LB of the first left side wall 72L. The second left wall 83L is located on or over the first left wall 73L (see FIG. 8) of the connection member 70. As illustrated in FIG. 11, the second left wall 83L preferably includes second left engagement portions 83LX that engage with the first left engagement portions 73LX (see FIG. 8). As illustrated in FIG. 6, bolts 48 are inserted into the first and second left engagement portions 73LX and 83LX, thus engaging the first and second left engagement portions 73LX and 83LX to each other.

As illustrated in FIG. 11, the second right wall 83R extends in the front-rear direction of the vehicle. The second right wall 83R is located rightward relative to the second upper wall 91 of the plate member 90. As illustrated in FIG. 4, the second right wall 83R overlaps with the grab bar 18 in the plan view of the vehicle. As illustrated in FIG. 6, the second right wall 83R is disposed rightward of the second right portion 74RB of the first right side wall 72R. The second right wall 83R is located on or over the first right wall 73R (see FIG. 8) of the connection member 70. As illustrated in FIG. 11, the second right wall 83R preferably includes second right engagement portions 83RX that engage with the first right engagement portions 73RX (see FIG. 8). As illustrated in FIG. 6, bolts 48 are inserted into the first and second right engagement portions 73RX and 83RX, thus engaging the first and second right engagement portions 73RX and 83RX to each other.

As illustrated in FIG. 11, the main body 81 extends obliquely downward and rearward from the plate member 90. The main body 81 is provided with first attachment portions 82A to which a license plate (not illustrated) is attachable. The license plate is disposed on the mudguard 80. The main body 81 is further provided with a second attachment portion 82B to which a license plate light 86 (see FIG. 2) is attachable. The second attachment portion 82B is located higher than the first attachment portions 82A. As illustrated in FIG. 2, the license plate light 86 is attached to the second attachment portion 82B (see FIG. 11). The license plate light 86 is arranged to apply light to the license plate when the license plate is attached to the first attachment portions 82A. The license plate light 86 and the battery 12 are connected to each other through a cable 14 (see FIG. 9). As illustrated in FIG. 9, the cable 14 is disposed on the lower wall 94 of the plate member 90. The cable 14 is disposed under the opening 91O of the second upper wall 91. The cable 14 is disposed under the first upper wall 71 of the connection member 70.

As illustrated in FIG. 2, in the motorcycle 1, the connection member 70 is connected to the right and left seat frames 40R and 40L at the positions forward relative to the right and left rear flashers 64R and 64L as mentioned above. Therefore, a length measured from the connection positions between the connection member 70 and the right and left seat frames 40R and 40L to the rear end 80R of the mudguard 80 is relatively long. However, the connection member 70 having high rigidity connects the mudguard 80 and the right and left seat frames 40R and 40L to each other, and therefore, a length of the mudguard 80 in the front-rear direction of the vehicle is shorter and rigidity of the mudguard 80 is higher than when the rear fender 62 and the mudguard 80 are molded in one piece. As illustrated in FIG. 9, the first left side wall 72L and the first right side wall 72R of the connection member 70 each extend obliquely downward. Hence, although the connection member 70 does not change in weight, a length of the connection member 70 in the width direction of the vehicle is longer than when the first left side wall 72L and the first right side wall 72R simply extend downward, i.e., than when the connection member 70 is U-shaped in cross section. As a result, the connection member 70 provides improved protection against mud. The connection member 70 is provided with the first and second openings 72LO and 72RO for a reduction in weight of the motorcycle 1. The first and second openings 72LO and 72RO are covered with the plate member 90 made of a lightweight resin material. Therefore, even when the first left side wall 72L and the first right side wall 72R of the connection member 70 extend obliquely downward, mud or the like thrown up from the rear wheel 7 is prevented from splashing on the tail light 60 and/or the rider through the first and second openings 72LO and 72RO.

As illustrated in FIG. 11, in the motorcycle 1 according to the present preferred embodiment, the plate member 90 and the mudguard 80 are molded in one piece. Thus, a component that connects the plate member 90 and the mudguard 80 to each other does not have to be provided, and therefore, the number of components is reduced, resulting in a reduction in weight.

As illustrated in FIGS. 8 and 11, in the motorcycle 1 according to the present preferred embodiment, the first upper wall 71 of the connection member 70 and the second upper wall 91 of the plate member 90 are disposed between the second left wall 83L and the second right wall 83R, the lower surface 71 B (see FIG. 9) of the first upper wall 71 of the connection member 70 faces the upper surface 91 U (see FIG. 9) of the second upper wall 91 of the plate member 90, and the upper surface 73LU of the first left wall 73L and the upper surface 73RU of the first right wall 73R face the lower surface 83LB of the second left wall 83L and the lower surface 83RB of the second right wall 83R, respectively. As a result, the connection member 70 and the mudguard 80 are connected to each other with more reliability.

As illustrated in FIG. 6, in the motorcycle 1 according to the present preferred embodiment, the second left wall 83L is disposed leftward of the second left portion 74LB of the first left side wall 72L. Thus, even when the dimension L2 of the second left portion 74LB in the width direction of the vehicle is made smaller than the dimension L1 of the first left portion 74LA in the width direction of the vehicle, the second left wall 83L provides protection against, for example, mud thrown up from the rear wheel 7. The second right wall 83R is disposed rightward of the second right portion 74RB of the first right side wall 72R. Thus, even when the dimension R2 of the second right portion 74RB in the width direction of the vehicle is made smaller than the dimension R1 of the first right portion 74RA in the width direction of the vehicle, the second right wall 83R provides protection against, for example, mud thrown up from the rear wheel 7. Consequently, the connection member 70 is reduced in size, resulting in a reduction in weight.

As illustrated in FIG. 2, in the motorcycle 1 according to the present preferred embodiment, the dimension L3 of the first left portion 74LA in the up-down direction of the vehicle is larger than the dimension L4 of the second left portion 74LB in the up-down direction of the vehicle, and the dimension R3 of the first right portion 74RA in the up-down direction of the vehicle is larger than the dimension R4 of the second right portion 74RB in the up-down direction of the vehicle. As a result, the connection member 70 itself is reduced in weight while rigidity of the connection member 70 is ensured.

As illustrated in FIG. 9, in the motorcycle 1 according to the present preferred embodiment, the lower wall 94 is disposed under the cable 14, thus preventing, for example, mud or a stone thrown up from the rear wheel 7 from splashing or hitting on the cable 14.

As illustrated in FIG. 10, in the motorcycle 1 according to the present preferred embodiment, the left end 75L of the first left side wall 72L is located leftward relative to the left end 7L of the rear wheel 7 in the rear view of the vehicle, and the right end 75R of the first right side wall 72R is located rightward relative to the right end 7R of the rear wheel 7 in the rear view of the vehicle. Thus, the connection member 70 extends largely in the width direction of the vehicle, and therefore, the connection member 70 provides improved protection against mud.

As illustrated in FIG. 2, in the motorcycle 1 according to the present preferred embodiment, the front edge 72LF of the first opening 72LO and the front edge 72RF of the second opening 72RO are located forward relative to the rear end 10R of the seat 10, and the rear edge 72LR of the first opening 72LO and the rear edge 72RR of the second opening 72RO are located rearward relative to the front-rear intermediate point 60C of the tail light 60. Thus, the first and second openings 72LO and 72RO are large in size, and therefore, the connection member 70 is reduced in weight.

### REFERENCE SIGNS LIST

- 60: tail light
- 62: rear fender
- 64L: left rear flasher
- 64R: right rear flasher
- 70: connection member
- 72L: first left side wall
- 72LO: first opening
- 72R: first right side wall
- 72RO: second opening
- 80: mudguard
- 90: plate member

## Claims

1. A straddle-type vehicle (1) comprising:
a main frame (32);
a left seat frame (40L) extending rearward from the main frame (32);
a right seat frame (40R) extending rearward from the main frame (32), the right seat frame (40R) being disposed rightward of the left seat frame (40L);
a tail light (60) disposed rearward relative to the left seat frame (40L) and the right seat frame (40R);
a left rear flasher (64L) disposed forward relative to the tail light (60);
a right rear flasher (64R) disposed forward relative to the tail light (60);
a rear wheel (7) disposed below the left seat frame (40L) and the right seat frame (40R);
a rear fender (62) disposed under the left seat frame (40L) and the right seat frame (40R) and over a portion of the rear wheel (7);
a metal connection member (70) disposed under the tail light (60) and connected to the left seat frame (40L) and the right seat frame (40R) at positions forward relative to the left rear flasher (64L) and the right rear flasher (64R); and
a mudguard (80) connected to the connection member (70), the mudguard (80) including a rear end (80R) disposed rearward relative to the rear wheel (7),
**characterized in that**
the connection member (70) extends rearward from the left seat frame (40L) and the right seat frame (40R); and
the mudguard (80) extends obliquely downward and rearward from the connection member (70),
wherein the connection member (70) includes: a first upper wall (71) overlapping with the rear wheel (7) in a plan view of the vehicle; a first left side wall (72L) extending obliquely downward and leftward from a left end of the first upper wall (71) and provided with a first opening (72LO); and a first right side wall (72R) extending obliquely downward and rightward from a right end of the first upper wall (71) and provided with a second opening (72RO), and
wherein the first opening (72LO) and the second opening (72RO) are covered with a plate member (90) molded of a resin material that is lighter in weight than the connection member (70).

2. A straddle-type vehicle (1) according to claim 1, **characterized in that** the plate member (90) and the mudguard (80) are molded in one piece.

3. A straddle-type vehicle (1) according to claim 1 or 2, **characterized in that** the connection member (70) includes: a first left wall (73L) including a first left engagement portion (73LX) and extending leftward from the first left side wall (72L); and a first right wall (73R) including a first right engagement portion (73RX) and extending rightward from the first right side wall (72R),
wherein the mudguard (80) includes: a second left wall (83L) including a second left engagement portion (83LX) that engages with the first left engagement portion (73LX); and a second right wall (83R) including a second right engagement portion (83RX) that engages with the first right engagement portion (73RX),
wherein the plate member (90) includes: a second upper wall (91) disposed to face the first upper wall (71); a second left side wall (92L) extending obliquely downward and leftward from a left end of the second upper wall (91), and covering the first opening (72LO); and a second right side wall (92R) extending obliquely downward and rightward from a right end of the second upper wall (91), and covering the second opening (72RO),
wherein the first upper wall (71) of the connection member (70) and the second upper wall (91) of the plate member (90) are disposed between the second left wall (83L) and the second right wall (83R),
wherein a lower surface (71 B) of the first upper wall (71) of the connection member (70) faces an upper surface (91 U) of the second upper wall (91) of the plate member (90), and
wherein an upper surface (73LU) of the first left wall (73L) and an upper surface (73RU) of the first right wall (73R) face a lower surface (83LB) of the second left wall (83L) and a lower surface (83RB) of the second right wall (83R), respectively.

4. A straddle-type vehicle (1) according to claim 3, **characterized in that** the first left side wall (72L) includes: a first left portion (74LA) provided with the first opening (72LO); and a second left portion (74LB) located rearward relative to the first left portion (74LA),
wherein a dimension (L2) of the second left portion (74LB) in a width direction of the vehicle is smaller than a dimension (L1) of the first left portion (74LA) in the width direction of the vehicle,
wherein the second left wall (83L) is disposed leftward of the second left portion (74LB) of the first left side wall (72L),
wherein the first right side wall (72R) includes: a first right portion (74RA) provided with the second opening (72RO); and a second right portion (74RB) located rearward relative to the first right portion (74RA),
wherein a dimension (R2) of the second right portion (74RB) in the width direction of the vehicle is smaller than a dimension (R1) of the first right portion (74RA) in the width direction of the vehicle, and
wherein the second right wall (83R) is disposed rightward of the second right portion (74RB) of the first right side wall (72R).

5. A straddle-type vehicle (1) according to claim 4, **characterized in that** a dimension (L3) of the first left portion (74LA) in an up-down direction of the vehicle is larger than a dimension (L4) of the second left portion (74LB) in the up-down direction of the vehicle, and
wherein a dimension (R3) of the first right portion (74RA) in the up-down direction of the vehicle is larger than a dimension (R4) of the second right portion (74RB) in the up-down direction of the vehicle.

6. A straddle-type vehicle (1) according to any one of claims 3 to 5, **characterized by:**
a battery (12) disposed in front of the tail light (60);
an attachment portion (82A) to which a license plate is attachable, the attachment portion (82A) being disposed on the mudguard (80);
a license plate light (86) disposed above the attachment portion (82A), the license plate light (86) being arranged to apply light to the license plate when the license plate is attached to the attachment portion (82A); and
a cable (14) connected to the battery (12) and the license plate light (86),
wherein the plate member (90) includes a lower wall (94) disposed below the second upper wall (91) and extending in a front-rear direction of the vehicle, and
wherein the cable (14) is disposed on the lower wall (94).

7. A straddle-type vehicle (1) according to any one of claims 1 to 6, **characterized in that** a left end (75L) of the first left side wall (72L) is located leftward relative to a left end (7L) of the rear wheel (7) in a rear view of the vehicle, and a right end (75R) of the first right side wall (72R) is located rightward relative to a right end (7R) of the rear wheel (7) in the rear view of the vehicle.

8. A straddle-type vehicle (1) according to any one of claims 1 to 7, **characterized by** a seat (10) disposed above the left seat frame (40L) and the right seat frame (40R), wherein the first opening (72LO) and the second opening (72RO) extend in a front-rear direction of the vehicle,
wherein a front edge (72LF) of the first opening (72LO) and a front edge (72RF) of the second opening (72RO) are located forward relative to a rear end (10R) of the seat (10), and
wherein a rear edge (72LR) of the first opening (72LO) and a rear edge (72RR) of the second opening (72RO) are located rearward relative to a front-rear intermediate point (60C) of the tail light (60).

## Patentansprüche

1. Grätsch-Sitz-Typ-Fahrzeug (1), das umfasst:
einen Haupt-Rahmen (32);
einen linken Sitz-Rahmen (40L), der sich nach hinten von dem Haupt-Rahmen (32) erstreckt;
einen rechten Sitz-Rahmen (40R), der sich nach hinten von dem Haupt-Rahmen (32) erstreckt, der rechte Sitz-Rahmen (40R) ist rechts von dem linken Sitz-Rahmen (40L) positioniert;
ein Rück-Licht (60), das relativ hinter zu dem linken Sitz-Rahmen (40L) und dem rechten Sitz-Rahmen (40R) positioniert ist;
einen linken hinteren Blinker (64L), der relativ vor dem Rück-Licht (60) positioniert ist;
einen rechten hinteren Blinker (64R), der relativ vor dem Rück-Licht (60) positioniert ist;
ein Hinter-Rad (7), das unterhalb des Sitz-Rahmens (40L) und des rechten Sitz-Rahmens (40R) positioniert ist;
ein hinteres Schutzblech (62), das unter dem linken Sitz-Rahmen (40L) und dem rechten Sitz-Rahmen (40R) und über einem Abschnitt des Hinter-Rads (7) positioniert ist;
ein Metall-Verbindungselement (70), das unter dem Rück-Licht (60) positioniert ist und mit dem linken Sitz-Rahmen (40L) und dem rechten Sitz-Rahmen (40R) an Positionen relativ vor dem linken hinteren Blinker (64L) und dem rechten hinteren Blinker (64R) verbunden ist; und
einen Schmutz-Fänger (80), der mit dem Verbindungselement (70) verbunden ist, der Schmutz-Fänger (80) beinhaltet ein hinteres Ende (80R), das relativ hinter dem Hinter-Rad (7) positioniert ist,
**dadurch gekennzeichnet, dass**
das Verbindungselement (70) sich nach hinten von dem linken Sitz-Rahmen (40L) und dem rechten Sitz-Rahmen (40R) erstreckt; und
der Schmutz-Fänger (80) sich schräg nach unten und hinten von dem Verbindungselement (70) erstreckt,
wobei das Verbindungselement (70) beinhaltet: eine erste obere Wand (71), die mit dem Hinter-Rad (7) in einer Draufsicht des Fahrzeugs überlappt; eine erste linke Seitenwand (72L), die sich schräg nach unten und links von einem linken Ende der ersten oberen Wand (71) erstreckt und mit einer ersten Öffnung (72LO) vorgesehen ist; und eine erste rechte Seitenwand (72R), die sich schräg nach unten und rechts von einem rechten Ende der ersten oberen Wand (71) erstreckt und mit einer zweiten Öffnung (72RO) vorgesehen ist, und
wobei die erste Öffnung (72LO) und die zweite Öffnung (72RO) mit einem Plattenelement (90) abgedeckt sind, das aus Harzmaterial gegossen ist, das leichter im Gewicht als das Verbindungselement (70) ist.

2. Ein Grätsch-Sitz-Typ-Fahrzeug (1) gemäß Anspruch 1, **dadurch gekennzeichnet, dass** das Plattenelement (90) und der Schmutz-Fänger (80) in einem Stück gegossen sind.

3. Ein Grätsch-Sitz-Typ-Fahrzeug (1) gemäß Anspruch 1 oder 2, **dadurch gekennzeichnet, dass** das Verbindungselement (70) beinhaltet: eine erste linke Wand (73L), die einen ersten linken Eingriffsabschnitt (73LX) beinhaltet und sich nach links von der ersten linken Seitenwand (72L) erstreckt; und eine erste rechte Wand (73R), die einen ersten rechten Eingriffsabschnitt (73RX) beinhaltet und sich nach rechts von der ersten rechten Seitenwand (72R) erstreckt,
wobei der Schmutz-Fänger (80) beinhaltet: eine zweite linke Wand (83L), die einen zweiten linken Eingriffsabschnitt (83LX) beinhaltet, der mit dem ersten linken Eingriffsabschnitt (73LX) in Eingriff ist; und eine zweite rechte Wand (83R), die einen zweiten rechten Eingriffsabschnitt (83RX) beinhaltet, der mit dem ersten rechten Eingriffsabschnitt (73RX) in Eingriff ist,
wobei das Plattenelement (90) beinhaltet: eine zweite obere Wand (91), positioniert gegenüber zu der ersten oberen Wand (71); eine zweite linke Seitenwand (92L), die sich schräg nach unten und links von einem linken Ende der zweiten oberen Wand (91) erstreckt, und die erste Öffnung (72LO) abdeckt; und eine zweite rechte Seitenwand (92R), die sich schräg nach unten und rechts von einem rechten Ende der zweiten oberen Wand (91) erstreckt, und die zweite Öffnung (72RO) abdeckt, wobei die erste obere Wand (71) des Verbindungselements (70) und die zweite obere Wand (91) des Plattenelements (90) zwischen der zweiten linken Wand (83L) und der zweiten rechten Wand (83R) positioniert sind,
wobei eine untere Fläche (71 B) der ersten oberen Wand (71) des Verbindungselements (70) gegenüber einer oberen Fläche (91 U) der zweiten oberen Wand (91) des Plattenelements (90) ist, und
wobei eine obere Fläche (73LU) der ersten linken Wand (73L) und eine obere Fläche (73RU) der ersten rechten Wand (73R) gegenüber einer unteren Fläche (83LB) der zweiten linken Wand (83L) und einer unteren Fläche (83RB) der zweiten rechten Wand (83R) jeweils angeordnet sind.

4. Ein Grätsch-Sitz-Typ-Fahrzeug (1) gemäß Anspruch 3, **dadurch gekennzeichnet, dass** die erste linke Seitenwand (72L) beinhaltet: einen ersten linken Abschnitt (74LA), der mit der ersten Öffnung (72LO) vorgesehen ist; und einen zweiten linken Abschnitt (74LB), der relativ hinter zu dem linken Abschnitt (74LA) angeordnet ist, wobei eine Abmessung (L2) des zweiten linken Abschnitts (74LB) in einer Breiten-Richtung des Fahrzeugs kleiner ist als eine Abmessung (L1) des ersten linken Abschnitts (74LA) in der Breiten-Richtung des Fahrzeugs,
wobei die zweite linke Wand (83L) links von dem zweiten linken Abschnitt (74LB) der ersten linken Seitenwand (72L) positioniert ist,
wobei die erste rechte Seitenwand (72R) beinhaltet: einen ersten rechten Abschnitt (74RA), der mit der zweiten Öffnung (72RO) vorgesehen ist; und einen zweiten rechten Abschnitt (74RB), der relativ hinter zu dem ersten rechten Abschnitt (74RA) angeordnet ist,
wobei eine Abmessung (R2) des zweiten rechten Abschnitts (74RB) in der Breiten-Richtung des Fahrzeugs kleiner ist als eine Abmessung (R1) des ersten rechten Abschnitts (74RA) in der Breiten-Richtung des Fahrzeugs, und
wobei die zweite rechte Wand (83R) rechts von dem zweiten rechten Abschnitt (74RB) der ersten rechten Seitenwand (72R) positioniert ist.

5. Ein Grätsch-Sitz-Typ-Fahrzeug (1) gemäß Anspruch 4, **dadurch gekennzeichnet, dass** eine Abmessung (L3) des ersten linken Abschnitts (74LA) in einer Oben-Unten-Richtung des Fahrzeugs größer ist als eine Abmessung (L4) des zweiten linken Abschnitts (74LB) in der Oben-Unten-Richtung des Fahrzeugs, und
wobei eine Abmessung (R3) des ersten rechten Abschnitts (74RA) in der Oben-Unten-Richtung des Fahrzeugs größer ist als eine Abmessung (R4) des zweiten rechten Abschnitts (74RB) in der Oben-Unten-Richtung des Fahrzeugs.

6. Ein Grätsch-Sitz-Typ-Fahrzeug (1) gemäß irgendeinem der Ansprüche 3 bis 5, **gekennzeichnet durch:**
eine Batterie (12), die vor dem Rück-Licht (60) positioniert ist;
einen Anbringungsabschnitt (82A), an dem eine Lizenz-Platte anbringbar ist, der Anbringungsabschnitt (82A) ist auf dem Schmutz-Fänger (80) positioniert;
ein Lizenz-Platten-Licht (86), das oberhalb des Anbringungsabschnitts (82A) positioniert ist, das Lizenz-Platten-Licht (86) ist angeordnet, um Licht auf die Lizenz-Platte aufzubringen, wenn die Lizenz-Platte an dem Anbringungsabschnitt (82A) angebracht ist; und
ein Kabel (14), das mit der Batterie (12) und dem Lizenz-Platten-Licht (86) verbunden ist,
wobei das Plattenelement (90) eine untere Wand (94) beinhaltet, die unterhalb der zweiten oberen Wand (91) positioniert ist und sich in eine Vorder-Rück-Richtung des Fahrzeugs erstreckt, und
wobei das Kabel (14) an der unteren Wand (94) positioniert ist.

7. Ein Grätsch-Sitz-Typ-Fahrzeug (1) gemäß irgendeinem der Ansprüche 1 bis 6, **dadurch gekennzeichnet, dass** ein linkes Ende (75L) der ersten linken Seitenwand (72L) relativ links zu einem linken Ende (7L) des Hinter-Rads (7) in einer Rück-Ansicht des Fahrzeugs angeordnet ist, und ein rechtes Ende (75R) der ersten rechten Seitenwand (72R) ist relativ rechts zu einem rechten Ende (7R) des Hinter-Rads (7) in einer Rück-Ansicht des Fahrzeugs angeordnet.

8. Ein Grätsch-Sitz-Typ-Fahrzeug (1) gemäß irgendeinem der Ansprüche 1 bis 7, **gekennzeichnet durch** einen Sitz (10), der oberhalb des linken Sitz-Rahmens (40L) und des rechten Sitz-Rahmens (40R) positioniert ist,
wobei die erste Öffnung (72LO) und die zweite Öffnung (72RO) sich in einer Vorder-Rück-Richtung des Fahrzeugs erstrecken,
wobei eine vordere Kante (72LF) der ersten Öffnung (72LO) und eine vordere Kante (72RF) der zweiten Öffnung (72RO) relativ vor einem hinteren Ende (10R) des Sitzes (10) angeordnet sind, und
wobei eine hintere Kante (72LR) der ersten Öffnung (72LO) und ein hintere Kante (72RR) der zweiten Öffnung (72RO) relativ hinter einem Vorder-Rück-ZwischenPunkt (60C) des Rück-Lichts (60) angeordnet sind.

## Revendications

1. Véhicule de type à chevaucher (1) comprenant :
un cadre principal (32),
un cadre de siège gauche (40L) s'étendant vers l'arrière depuis le cadre principal (32),
un cadre de siège droit (40R) s'étendant vers l'arrière depuis le cadre principal (32), le cadre de siège droit (40R) étant placé à la droite du cadre de siège gauche (40L),
un feu arrière (60) placé vers l'arrière par rapport au cadre de siège gauche (40L) et au cadre de siège droit (40R),
un clignotant arrière gauche (64L) placé vers l'avant par rapport au feu arrière (60),
un clignotant arrière droit (64R) placé vers l'avant par rapport au feu arrière (60),
une roue arrière (7) placée en dessous du cadre de siège gauche (40L) et du cadre de siège droit (40R),
une aile arrière (62) placée sous le cadre de siège gauche (40L) et sous le cadre de siège droit (40R) et pardessus une partie de la roue arrière (7),
un élément de raccordement métallique (70) placé sous le feu arrière (60) et raccordé au cadre de siège gauche (40L) et au cadre de siège droit (40R) à des positions vers l'avant par rapport au clignotant arrière gauche (64L) et au clignotant arrière droit (64R), et
un garde-boue (80) assemblé à l'élément de raccordement (70), le garde-boue (80) incluant une extrémité arrière (80R) placée vers l'arrière par rapport à la roue arrière (7),
**caractérisé en ce que**
l'élément de raccordement (70) s'étend vers l'arrière depuis le cadre de siège gauche (40L) et le cadre de siège droit (40R) ; et le garde-boue (80) s'étend de manière oblique vers le bas et vers l'arrière depuis l'élément de raccordement (70),
l'élément de raccordement (70) incluant : une première paroi supérieure (71) en chevauchement avec la roue arrière (7) dans une vue en plan du véhicule ; une première paroi latérale gauche (72L) s'étendant de manière oblique vers le bas et vers la gauche depuis l'extrémité gauche de la première paroi supérieure (71) et munie d'une première ouverture (72LO) ; et une première paroi latérale droite (72R) s'étendant de manière oblique vers le bas et vers la droite depuis l'extrémité droite de la première paroi supérieure (71) et munie d'une seconde ouverture (72RO), et
la première ouverture (72LO) et la seconde ouverture (72RO) étant recouvertes par un élément de plaque (90) moulé à partir d'un matériau de résine qui est plus léger que l'élément de raccordement (70).

2. Véhicule de type à enfourcher (1) selon la revendication 1, **caractérisé en ce que** l'élément de plaque (90) et le garde-boue (80) sont moulés en une seule pièce.

3. véhicule de type à enfourcher (1) selon la revendication 1 ou la revendication 2, **caractérisé en ce que** l'élément de raccordement (70) inclut une première paroi gauche (73L) incluant une première partie de mise en prise gauche (73LX) et s'étendant vers la gauche depuis la première paroi latérale gauche (72L), et une première paroi droite (73R) incluant une première partie de mise en prise droite (73RX) et s'étendant vers la droite depuis la première paroi latérale droite (72R),
le garde-boue (80) incluant : une seconde paroi gauche (83L) incluant une seconde partie de mise en prise gauche (83LX) qui se met en prise avec la première partie de mise en prise gauche (73LX) ; et une seconde paroi droite (83R) incluant une seconde partie de mise en prise droite (83RX) qui se met en prise avec la première partie de mise en prise droite (73RX),
l'élément de plaque (90) incluant : une seconde paroi supérieure (91) placée pour faire face à la première paroi supérieure (71) ; une seconde paroi latérale gauche (92L) s'étendant de manière oblique vers le bas et vers la gauche depuis l'extrémité gauche de la seconde paroi supérieure (91) et recouvrant la première ouverture (72LO) ; ainsi qu'une seconde paroi latérale droite (92R) s'étendant de manière oblique vers le bas et vers la droite depuis l'extrémité droite de la seconde paroi supérieure (91) et recouvrant la seconde ouverture (72RO),
la première paroi supérieure (71) de l'élément de raccordement (70) et la seconde paroi supérieure (91) de l'élément de plaque (90) étant placées entre la seconde paroi gauche (83L) et la seconde paroi droite (83R),
une surface inférieure (71B) de la première paroi supérieure (71) de l'élément de raccordement (70) faisant face à une surface supérieure (91U) de la seconde paroi supérieure (91) de l'élément de plaque (90), et
une surface supérieure (73LU) de la première paroi gauche (73L) et une surface supérieure (73RU) de la première paroi droite (73R) faisant respectivement face à une surface inférieure (83LB) de la seconde paroi gauche (83L) et à une surface inférieure (83RB) de la seconde paroi droite (83R).

4. Véhicule de type à enfourcher (1) selon la revendication 3, **caractérisé en ce que** la première paroi latérale gauche (72L) inclut : une première partie gauche (74LA) pourvue de la première ouverture (72LO), et une seconde partie gauche (74LB) située vers l'arrière par rapport à la première partie gauche (74LA),
la dimension (L2) de la seconde partie gauche (74LB) dans la direction de la largeur du véhicule étant plus petite que la dimension (L1) de la première partie gauche (74LA) dans la direction de la largeur du véhicule,
la seconde paroi gauche (83L) étant placée vers la gauche de la seconde partie gauche (74LB) de la première paroi latérale gauche (72L),
la première paroi latérale droite (72R) incluant : une première partie droite (74LA) pourvue de la seconde ouverture (72RO), et une seconde partie droite (74RB) située vers l'arrière par rapport à la première partie droite (74RA),
la dimension (R2) de la seconde partie droite (74RB) dans la direction de la largeur du véhicule étant plus petite que la dimension (R1) de la première partie droite (74RA) dans la direction de la largeur du véhicule, et
la seconde paroi droite (83R) étant placée vers la droite de la seconde partie droite (74RB) de la première paroi latérale droite (72R).

5. Véhicule de type à enfourcher (1) selon la revendication 4, **caractérisé en ce que** la dimension (L3) de la première partie gauche (74LA) dans la direction du haut vers le bas du véhicule est plus grande que la dimension (L4) de la seconde partie gauche (74LB) dans la direction du haut vers le bas du véhicule, et
la dimension (R3) de la première partie droite (74RA) dans la direction du haut vers le bas du véhicule est plus grande que la dimension (R4) de la seconde partie droite (74RB) dans la direction du haut vers le bas du véhicule.

6. Véhicule de type à enfourcher (1) selon l'une quelconque des revendications 3 à 5, **caractérisé par** une batterie (12) placée devant le feu arrière (60),
une partie de fixation (82A) à laquelle peut être fixée une plaque minéralogique, la partie de fixation (82A) placée sur le garde-boue (80),
un éclairage de plaque minéralogique (86) placé au-dessus de la partie de fixation (82A), l'éclairage de plaque minéralogique (86) étant agencé pour appliquer de la lumière à la plaque minéralogique lorsque la plaque minéralogique est fixée à la partie de fixation (82A), et
un câble (14) raccordé à la batterie (12) et à l'éclairage de plaque minéralogique (86),
l'élément de plaque (90) incluant une paroi inférieure (94) placée en dessous de la seconde paroi supérieure (91) et s'étendant dans la direction avant arrière du véhicule, et le câble (14) étant placé sur la paroi inférieure (94).

7. véhicule de type à enfourcher (1) selon l'une quelconque des revendications 1 à 6, **caractérisé en ce qu'une** extrémité gauche (75L) de la première paroi latérale gauche (72L) est située vers la gauche par rapport à l'extrémité gauche (7L) de la roue arrière (7) dans une vue arrière du véhicule, et **en ce qu'**une extrémité droite (75R) de la première paroi latérale droite (72R) est située vers la droite par rapport à l'extrémité droite (7R) de la roue arrière (7) dans la vue arrière du véhicule.

8. Véhicule de type à enfourcher (1) selon l'une quelconque des revendications 1 à 7, **caractérisé par** un siège (10) placé au-dessus du cadre de siège gauche (40L) et du cadre de siège droit (40R), la première ouverture (72LO) et la seconde ouverture (72RO) s'étendant dans la direction avant arrière du véhicule,
le bord avant (72LF) de la première ouverture (72LO) et le bord avant (72RF) de la seconde ouverture (72RO) étant situés vers l'avant par rapport à l'extrémité arrière (10R) du siège (10), et
le bord arrière (72LR de la première ouverture (72LO) et le bord arrière (72RR) de la seconde ouverture (72RO) étant situés vers l'arrière par rapport à un point intermédiaire entre avant et arrière (60C) du feu arrière (60).
